## Europäisches Patentamt
## European Patent Office
## Office européen des brevets

(19)

(11) Numéro de publication: **0 059 150**
**B1**

(12) ## FASCICULE DE BREVET EUROPEEN

(45) Date de publication du fascicule du brevet:
06.06.84

(51) Int. Cl.³: **F 16 F 9/49,** F 16 F 9/32

(21) Numéro de dépôt: 82400312.3

(22) Date de dépôt: 22.02.82

(54) Dispositif de butée de fin de course d'amortisseur et appareil téléscopique analogue.

(30) Priorité: 23.02.81 FR 8103530

(43) Date de publication de la demande:
01.09.82 Bulletin 82/35

(45) Mention de la délivrance du brevet:
06.06.84 Bulletin 84/23

(84) Etats contractants désignés:
AT BE CH DE FR GB IT LI LU NL SE

(56) Documents cités:
DE - A - 2 511 407
DE - B - 1 145 445
FR - A - 1 121 131
FR - A - 1 472 447
FR - A - 2 376 341
FR - A - 2 449 237
US - A - 2 078 364
US - A - 3 046 000

(73) Titulaire: **Société J.G. ALLINQUANT, 119, Avenue Paul Vaillant Couturier, F-94250 Gentilly (FR)**

(72) Inventeur: **Allinquant, Jacques Gabriel, 41, Avenue Bosquet, F-75007 Paris (FR)**

(74) Mandataire: **De Boisse, Louis, 37, Avenue Franklin D. Roosevelt, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

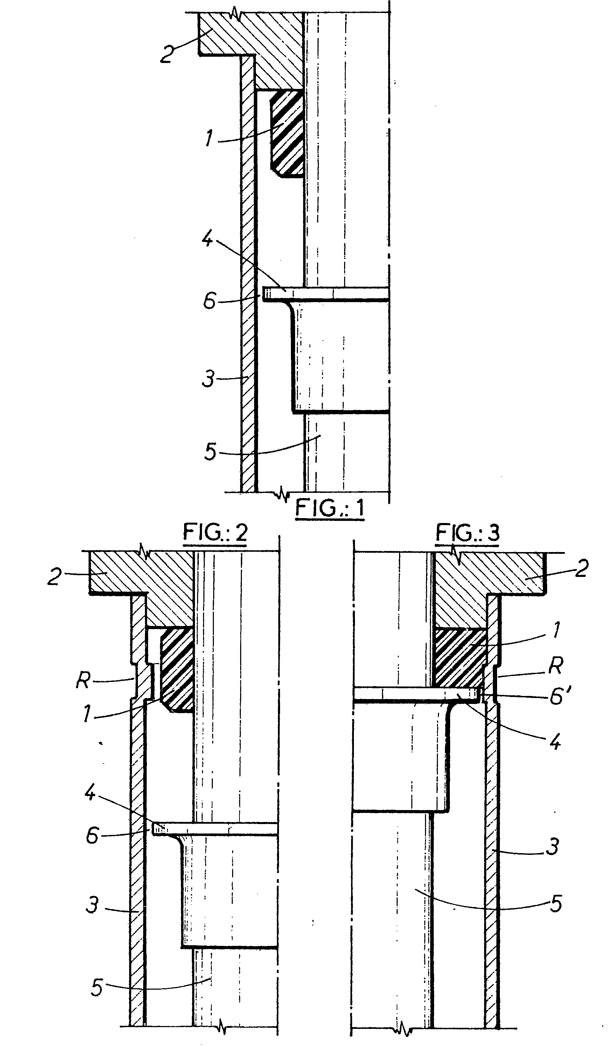

Les amortisseurs couramment utilisés dans l'industrie automobile sont en principe pourvus d'un limiteur de course de détente composé de deux butées respectivement fixe et mobile (comme on peut le voir sur la représentation schématique de la fig. 1 des dessins annexés), à savoir: d'une part, une butée 1 en matériau élastomère procurant une courbe de déflexion progressive et montée contre le fond guide-tige 2 du tube de travail 3 de l'amortisseur; d'autre part, une butée rigide 4 solidaire de la tige de piston 5 de l'amortisseur et venant comprimer la première butée 1 en fin de course de détente du piston.

En service, la butée souple 1 s'écrase et en se déformant vient occuper tout le volume disponible qui lui est offert et qui comprend l'intervalle annulaire 6 entre la paroi du tube 3 et la périphérie de la butée rigide 4. Le matériau élastomère comprimé peut alors fluer par cet intervalle annulaire 6.

Il se crée de ce fait un risque sérieux, surtout lorsque la butée est fortement sollicitée, qu'elle se déchiquète ou se désagrège, provoquant la détérioration totale de l'amortisseur dès lors que des particules arrachées de matériau élastomère vont, par l'action des écoulements internes de l'amortisseur, se loger dans un clapet, entravant le fonctionnement de ce dernier. En général, l'avarie provient de ce que la butée rigide 4 solidaire de la tige de piston 5 découpe le talon de la butée souple 1.

Pour éviter une telle découpe, il faudrait donner à la butée mobile 4 un diamètre externe très voisin du diamètre interne du tube de travail 3. Mais alors la butée mobile se comporterait comme un véritable piston parasite engendrant un propre freinage hydraulique qui contrarierait celui du piston réel et rendrait pratiquement impossible le réglage correct du système d'amortissement hydraulique, car l'huile serait en permanence laminée entre la butée mobile 4 et le tube 3.

La présente invention permet d'éviter toute détérioration de la butée souple même sous forte sollicitation tout en n'induisant pas d'effets secondaires perturbateurs sur le fonctionnement hydraulique de l'amortisseur , et ce grâce à une adaptation simple et peu onéreuse, mais néanmoins d'une grande efficacité, comme l'ont démontré les essais effectués par la Demanderesse.

Conformément à la présente invention, on aménage un rétreint local annulaire du tube de travail de l'amortisseur ou analogue à proximité du fond guide-tige de celui-ci, sur une profondeur radiale telle que le diamètre interne du tube au droit de ce rétreint soit à peine supérieur au diamètre externe de la butée solidaire de la tige de piston, ne laissant subsister en fin de course de détente de cette tige qu'un jeu minime entre la périphérie de ladite butée et la paroi dudit rétreint.

La description qui va suivre en regard des dessins annexés, donnée à titre d'exemple non limitatif, fera bien comprendre comment l'invention peut être réalisée.

La fig. 1 est une vue schématique fragmentaire en demi-coupe axiale d'un amortisseur connu, dont il a été fait état dans le préambule ci-dessus.

Les fig. 2 et 3 sont des vues analogues montrant l'aménagement conforme à la présente invention, dans deux positions différentes de la tige de piston: respectivement en position intermédiaire et en position de fin de course de détente.

Comme on le voit, sur ces fig. 2 et 3, le tube de travail 3 est déformé, à sa partie terminale à proximité du fond guide-tige 2 et au droit de la butée en élastomère 1, de manière à réaliser un rétreint annulaire local R.

En fonctionnement normal (voir fig. 2), la butée mobile rigide 4 solidaire de la tige de piston 5 a un diamètre externe nettement plus petit que le diamètre interne du tube 3, laissant un intervalle annulaire 6 substantiel qui ne perturbe pas le réglage hydraulique de l'amortisseur. Lorsque cette butée mobile 4 vient, en fin de course de détente (voir fig. 3), en contact avec la butée fixe souple 1 et écrase celle-ci contre le fond guide-tige 2, le jeu annulaire 6' est très réduit du fait du rétreint local R et ne permet pas à la butée souple 1 de s'y introduire. Elle ne peut donc se déchiqueter.

Il va de soi que le mode de réalisation décrit n'est qu'un exemple et qu'on pourrait le modifier, notamment par substitution d'équivalents techniques, sans sortir pour cela du cadre de l'invention comme definie dans les revendications suirantes.

## Revendications

1. Dispositif de butée de fin de course d'un appareil télescopique à tube de travail et piston, comportant d'une part une butée fixe (1) en matériau élastomère montée contre le fond guide-tige (2) du tube de travail (3) et d'autre part une butée mobile rigide (4) solidaire de la tige de piston (5) et laissant un intervalle notable (6) entre sa périphérie et la paroi du tube (3), caractérisé en ce qu'un rétreint local annulaire (R) est aménagé sur le tube de travail (3) à proximité de son fond guide-tige (2), sur une profondeur radiale telle que la paroi du tube (3) au droit de ce rétreint (R) ne laisse subsister avec la périphérie de la butée mobile rigide (4) qu'un jeu minime (6'), en fin de course de la tige de piston (5).

2. Dispositif de butée selon la revendication 1, caractérisé en ce que le rétreint (R) s'étend sur tout le pourtour de tube de travail (3) au droit de la butée fixe souple (1).

3. Les amortisseurs et appareils télescopiques analogues comportant le dispositif de butée selon la revendication 1 ou 2.

## Patentansprüche

1. Endanschlag für eine teleskopische Vorrichtung mit Arbeitsrohr und Kolben, welcher einerseits aus einem festen Anschlag (1) aus elastomerem Material besteht, der an dem Boden (2) einer Führungsstange des Arbeitsrohres (3) angebracht ist und andererseits aus einem beweglichen festen Anschlag (4) besteht, der einstückig mit der Kolbenstange (5) ausgebildet ist und wobei ein beachtlicher Zwischenraum zwischen dem Umfang dieses Anschlages (4) und der Wandung des Rohres (3) besteht, dadurch gekennzeichnet, daß eine örtliche ringförmige Einschnürung (R) an dem Arbeitsrohr (3) in der Nähe des Bodens (2) der Führungsstange angeordnet ist, daß die Einschnürung (R) eine solche radiale Tiefe aufweist, daß zwischen der Wandung des Rohres (3) im Bereich dieser Einschnürung (R) und dem Umfang des beweglichen festen Anschlags (4) am Ende des Expansionshubes des Kolbens nur ein minimales Spiel (6') besteht.

2. Endanschlag nach Anspruch 1, dadurch gekennzeichnet, daß sich die Einschnürung (R) entlang des gesamten Umfangs des Arbeitsrohres (3) im Bereich des festen elastischen Anschlages (1) erstreckt.

3. Dämpfer und ähnliche teleskopische Einrichtungen welche einen Endanschlag entsprechend den Ansprüchen 1 oder 2 enthalten.

## Claims

1. Stroke end abutment device for a telescoping apparatus having a work tube and a piston, comprising on the one hand a stationary stop (1) made of elastomeric material fitted against the rod-guide bottom (2) of the work tube (3) and on the other hand a rigid movable stop (4) integral with the piston rod (5) and leaving a substantial clearance (6) between its periphery and the wall of the tube (3), characterized in that a localized annular constriction (R) is formed on the work tube (3) adjacent its rod-guide bottom (2), over a radial depth such that the wall of the tube (3) at the level of this constriction (R) leaves but a minute clearance (6') with the periphery of the rigid movable stop (4), at the end of the stroke of the piston rod (5).

2. Abutment device according to claim 1, characterized in that the constriction (R) extends all around the work tube (3) at a level with the flexible stationary stop (1).

3. The shock absorbers and like telescoping apparatus comprising the abutment device according to claim 1 or 2.

FIG.: 1

FIG.: 2

FIG.: 3